Europäisches Patentamt

European Patent Office

Office européen des brevets

(19)

(11) **EP 1 270 995 A1**

(12) **EUROPEAN PATENT APPLICATION**

(43) Date of publication:
02.01.2003 Bulletin 2003/01

(51) Int Cl.7: **F16H 1/32**

(21) Application number: **01115856.5**

(22) Date of filing: **28.06.2001**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI**<br><br>(71) Applicant: **Bonfiglio, Paolo**<br>**6534 San Vittore Grigioni (CH)** | (72) Inventor: **Bonfiglio, Paolo**<br>**6534 San Vittore Grigioni (CH)**<br><br>(74) Representative: **Concone, Emanuele et al**<br>**Società Italiana Brevetti S.p.A.**<br>**Via Carducci 8**<br>**20123 Milano (IT)** |

(54) **Speed-reducing device for transmitting a rotary motion through a toothed member with precession motion**

(57)    A speed-reducing device for transmitting a rotatory motion includes means for generating on a toothed member (B, E, M) a rotary motion of the axis of the toothed member (B, E, M) around a second axis, the toothed member (B, E, M) being engaged with at least another toothed member (C) through radially arranged front teeth, different in number between the two said members, which form a bevel gear, the toothed member (B, E, M) in contact with the driving means being provided with support and restraint means which allow the inclination of its axis. In its simplest embodiment, the rotatory motion comes from a driving shaft (A) provided with an end cam (T) in contact with two toothed members (B, C), the toothed member (B) in contact with the inclined face of the cam (T) being provided with a hemispherical support (S) and a flexible coupling (Z). The use of a second cam parallel to the first and of a disk with double toothing mounted between the two cams on a swivel-bearing and simultaneously engaging the two toothed members allows to obtain a further reduction stage, through which very high reduction ratios can be achieved with a very small device and even between coaxial or aligned shafts.

FIG. 1

EP 1 270 995 A1

**Description**

The present invention relates to speed reducers suitable to transmit a rotary motion, and in particular to a device which achieves said transmission and reduction through a toothed member which performs a precession motion.

It is known that there are many types of speed reducers applied in different fields, generally to transmit the power of a motor whose shaft rotates at high speed to a load which requires a lower speed of rotation. Typical examples are found in the field of land, air and sea transport where internal combustion, electric or turbine engines are coupled to wheels or propellers through speed reducers with reduction ratios that can be very high.

In order to achieve such high reductions and to transmit the great powers provided by the engines, conventional reducers may reach quite significant weights and size, and be very complicated and expensive both to manufacture and to maintain. Being either epicyclical, bihelical or simply straight-tooth reducers with rotation axes which are parallel, incident or not in the same plane, prior art reducers are a critical element of many units.

Therefore the object of the present invention is to provide a speed-reducing device which is free from said drawbacks. This object is achieved by means of a device wherein the reduction is obtained through the precession motion of a toothed member driven by suitable means. Other advantageous features of the present device in its various embodiments are disclosed in the dependent claims.

A first main advantage of the present device is that of being capable to achieve a high reduction ratio even with a single stage, and therefore even higher ratios with two stages, with a size much smaller with respect to conventional reducers.

A second significant advantage of this device stems from its structural simplicity, which results in low cost, reliability and easy production and maintenance.

A further advantage of this device is its strength and capability to transmit a high torque thanks to the many engaged teeth.

Still another advantage of the present device is given by its flexibility of use since it can be easily adapted to different situations, such as driving shaft and driven shaft rotating in the same direction or in opposite directions, or motion output on the same side of the input or on the opposite side. Moreover it allows the transmission between coaxial or aligned shafts.

Finally this device also has the advantage of being able to be used as variator-phaser.

Further advantages and characteristics of the device according to the present invention will be clear to those skilled in the art from the following detailed description of some embodiments thereof, with reference to the annexed drawings wherein:

Fig.1 is a diagrammatic longitudinal sectional view of the simplest embodiment of the present device;
Fig.2 is a longitudinal sectional view of a variation of the device in fig.1;
Fig.3 is a view similar to the preceding one which shows a further variation of said device;
Fig.4 is a diagrammatic longitudinal sectional view showing the application of the device as variator-phaser;
Fig.5 is a diagrammatic longitudinal sectional view, with relevant top plan half-view, showing a variation of the support and restraint system;
Fig.6 is a diagrammatic longitudinal sectional view showing a second embodiment of the driving means of the precessional toothed member;
Fig.7 is a diagrammatic longitudinal sectional view, with relevant top plan half-view, showing a third embodiment of said driving means;
Figs.8, 9, 10 and 11 are diagrammatic longitudinal sectional views showing some possible combinations of the support and restraint systems and of the driving means of the toothed member.

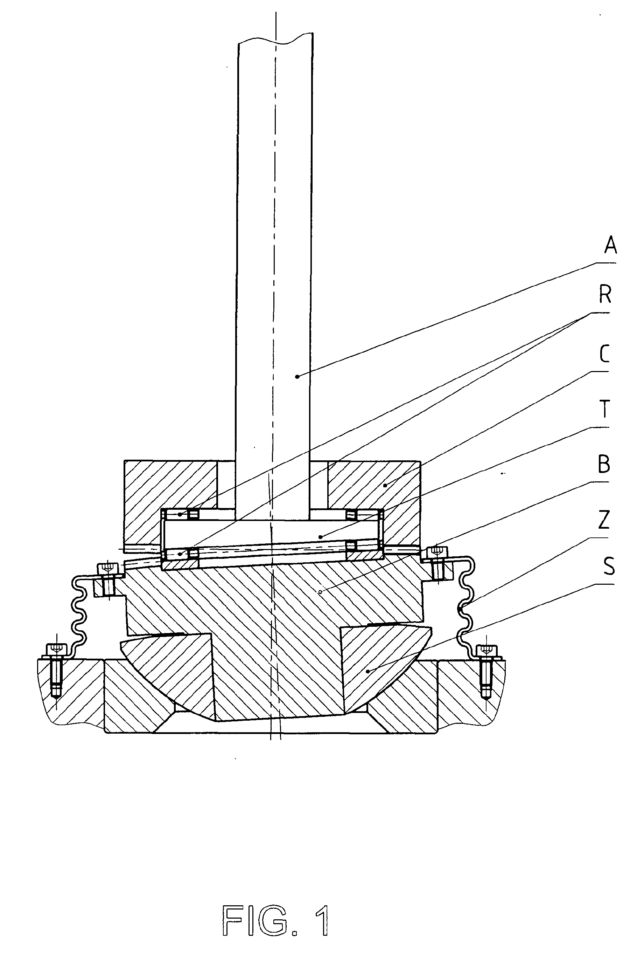

With reference to fig.1, there is now illustrated the basic principle of the device in its simplest form. Said operating principle remains the same also in the other variations described further on.

The driving shaft A carries at its end an end cam T, i.e. a flange having one face inclined with respect to the other, which is in contact (through needle bearings R) with two toothed members B and C provided with radially-arranged front teeth which form a precessional bevel gear.

This gear is defined as bevel gear in that the two axes of rotation of the toothed members B and C intersect, although not orthogonally as in conventional bevel gears, and precessional in that the axis of B rotates around the axis of C with a center of rotation on the average plane of engagement between B and C. Though toothed members B and C are usually round-shaped toothed wheels, they could take any other shape as long as the front toothings are radially arranged so as to allow a circular engagement.

More specifically, the distal inclined face of cam T is in contact with toothed member B, which is sustained by a hemispherical support S, while the proximal face, orthogonal to the axis of rotation, is in contact with toothed member C which is slipped freely rotatable on shaft A. In other words, none of the two toothed members B and C is integral with the driving shaft A which therefore does not directly transmit to them its own rotatory motion.

Furthermore, the number of teeth $Z_B$ of toothed member B is different for one or two teeth from the number of teeth $Z_C$ of toothed member C. The transmission and reduction of the motion takes place through the relative precession motion of toothed member B caused by the rotation of shaft A and thanks to the above-mentioned difference in the number of teeth.

In practice, cam T produces on toothed member B a rotating radial push, of null average value, and a rotating axial push lying in the plane defined by the axes of the two toothed members B and C. Said rotating axial push is equivalent to a system of forces made up of an axial push, along the axis of C, and a rotating bending moment lying in the above-mentioned plane defined by the axes of B and C.

The axial push is compensated for by the hemispherical support S while a flexible coupling Z prevents the rotation of toothed member B around its own axis, so as to allow only the inclination of the axis of B which due to the rotating bending moment rotates around the axis of toothed member C. Owing to this rotation of the axis of B and to the difference in the teeth number between the two toothed members, always new teeth of C engage with the teeth of B which for reaction is set into rotation. It should be noted that if B and C had the same number of teeth no rotation of C would be obtained.

In a period the point of contact between B and C covers a path of equal length on toothed members with different number of teeth, whereby there is produced a "gap" which results in the movement of one toothed member with respect to the other. In fact, defining m the diametral pitch of the toothed members, the path covered on B and C is respectively equal to:

$$I_B = z_B * m$$

$$I_C = z_C * m$$

whereby:

$$I_B - I_C = (z_B - z_C) * m$$

and defining $\theta_C$ the gap angle:

$$\theta_C = (I_B - I_C)/I_C = (z_B/z_C) - I$$

which in a period also corresponds to $\omega_C$, i.e. the angular velocity of C:

$$\omega_C = \theta_C/1 = (z_B/z_C) - 1$$

This same relation also expresses the reduction ratio $\tau$, since at every rotation of shaft A corresponds a rotation of the axis of B around the axis of C and thus the movement of toothed member C of a gap. Therefore with toothed members differing only for one or two teeth there is achieved a high reduction ratio, e.g. assuming $z_B = 59$ and $z_C = 60$ there is obtained $\tau = -1/60$, and vice versa for $z_B = 60$ and $z_C = 59$ there is obtained $\tau = 1/59$.

It should be noted that the negative sign of the reduction ratio indicates that the driven shaft integral with toothed member C rotates in the opposite direction with respect to the driving shaft A. This means that it is sufficient to swap the teeth number between B and C to obtain a reducer which, with very similar reduction ratios, can achieve or not also the reversal of the direction of rotation.

The precession motion of B, by precession motion meaning the combination of a rotatory motion around an axis and the simultaneous motion of the axis itself around a second axis, is relative in that toothed member C rotates and the axis of toothed member B rotates around the axis of rotation of C but member B does not rotate around its own axis since it is restrained by the flexible coupling Z.

It should also be noted that the above-described configuration could be inverted by reversing cam T, so that it is the proximal face that is inclined, and by arranging a ring-shaped hemispherical support and the flexible coupling Z to restrain toothed member C while toothed member B would have rotatory motion only. In this way the motion output would be on the side opposite with respect to shaft A (through B) rather than on the same side (through C) as illustrated above.

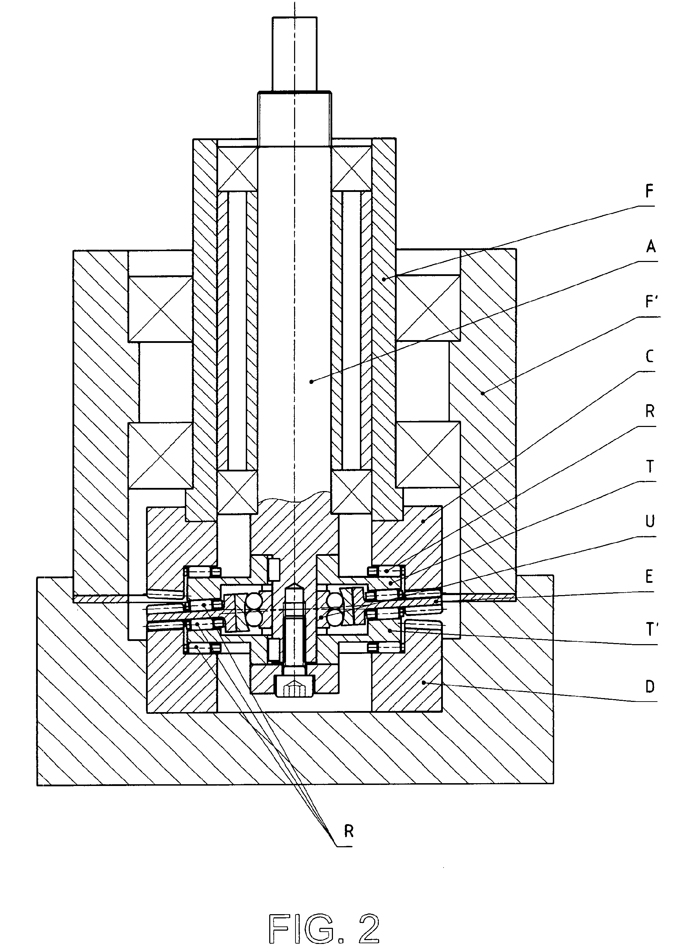

The second embodiment illustrated in fig.2 is based on the same principle but in this case the device includes a "double" end cam and an intermediate disk with double toothing. The end cam is double in that in addition to the above-described cam T there is also parallel thereto a second opposite cam T', i.e. a cam with the proximal face inclined and the distal face orthogonal to the axis of rotation. The inclined faces of the two cams T and T' are parallel and therebetween there is enclosed an intermediate disk E, whose axis can tilt since it is mounted on a central swivel-bearing U.

Disk E simultaneously engages toothed member C and a toothed member D which differently from toothed member B is integral with the case of the device. Between the toothed members C, D and disk E and the respective faces of cams T and T' there are arranged needle bearings R, as in the above-described first embodiment.

Thanks to the presence of two opposite cams, when shaft A rotates it transmits to disk E only the rotating bending moment since the axial and radial pushes are self-compensated and therefore have a null value at any time. As a consequence, the axis of disk E rotates similarly to toothed member B, but with center of rotation in the center of bearing U, while toothed member C moves with a purely rotatory motion which it transmits to the driven shaft F coaxial with the driving shaft A.

The presence of a second toothing between the distal face of disk E and toothed member D allows to obtain a second reduction stage. In fact, if also in this second gear the number of teeth is different there is achieved a reduction effect similar to the one achieved between the proximal face of disk E and toothed member C. Therefore in this case disk E has a precession motion which is relative with respect to C and absolute with respect to D.

More specifically, it is assumed that the toothings of disk E engaging C and D respectively include $z_{Ec}$ and $z_{ED}$ teeth and that toothed member D has $z_D$ teeth, whereby for a common gearing the reduction ratio would be:

$$\tau_o = (z_D/z_{EC})^*(z_{EC}/z_C)$$

moreover from the formula of Willis:

$$\tau_o = (\omega_C - \omega_A)/(\omega_D - \omega_A)$$

but since in this case $\omega_D = 0$, from the above relation it results:

$$\omega_C = \omega_A^*(1 - \tau_o)$$

whereby the actual reduction ratio is:

$$\tau = \omega_C/\omega_A = 1 - \tau_o = 1 - (z_D/z_{ED})^*(z_{EC}/z_C)$$

In order to achieve the greatest reduction it is necessary that $\tau_o$ be as close as possible to unity, which is obtained by making that $z_D < z_{ED}$ and $z_{EC} > z_C$, or vice versa $z_D > z_{ED}$ and $z_{EC} < z_C$, as long as there is a minimum difference between the toothings both in a same gear and between the two gears. For example, assuming that $z_D = 101$, $z_{ED} = 100$, $z_{EC} = 99$ and $z_C = 100$, there is obtained $\tau_o = 0,9999$ and therefore $\tau = 0,0001$, i.e. a reduction of 1 to 10.000 with just two small-sized gears.

Also in this case depending on $\tau_o$ being,chosen close to unity in excess or in lack there can be respectively obtained or not the reversal of the direction of rotation of the driven shaft with respect to the driving shaft.

Obviously the operation as described above remains substantially unchanged also if it is the toothed member C which is integral with the case and the toothed member D which is rotatable, in this instance the motion being transmitted to the driven shaft F' external to and coaxial with shaft F.

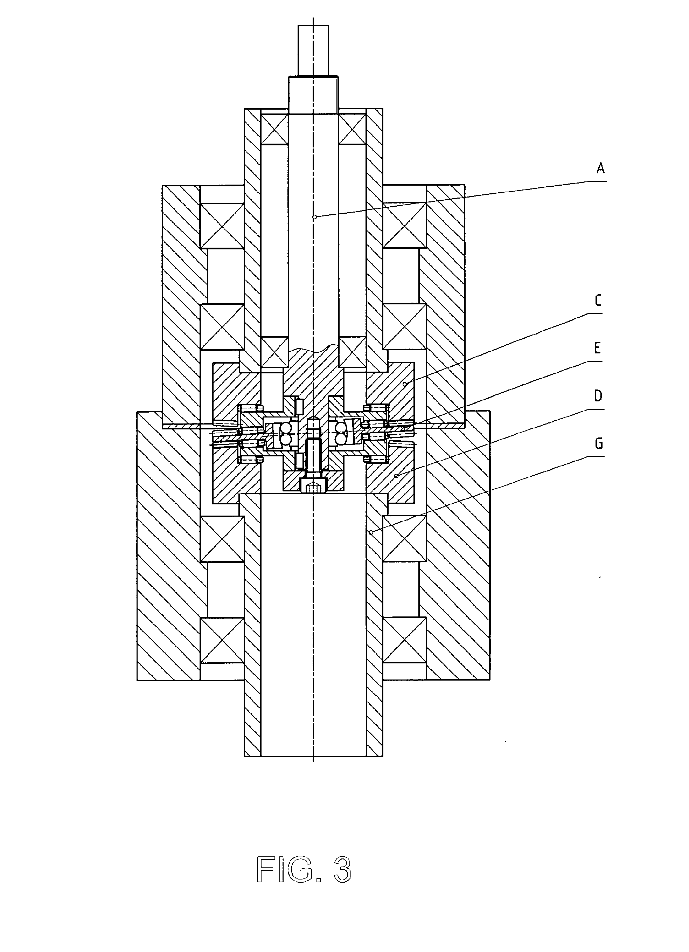

A similar variation, with fixed toothed member C and mobile toothed member D, is illustrated also in the third embodiment of fig.3 which is different from the previous one in that the driven shaft G exits the device on the side opposite with respect to the driving shaft A, and not on the same side as shaft F or F' of fig.2.

It should be noted that in this case if you decide not to change the number of teeth between the toothings of one of the two gears you will obtain a single-stage reducer which however allows the motion output on the side opposite with respect to the input side. In other words, this means returning to a situation similar to the first embodiment but here the intermediate disk is used to "realign" the motion and allow its output on the opposite side rather than on the same side as in fig.1, though keeping the swivable support at a distal position with respect to cam T.

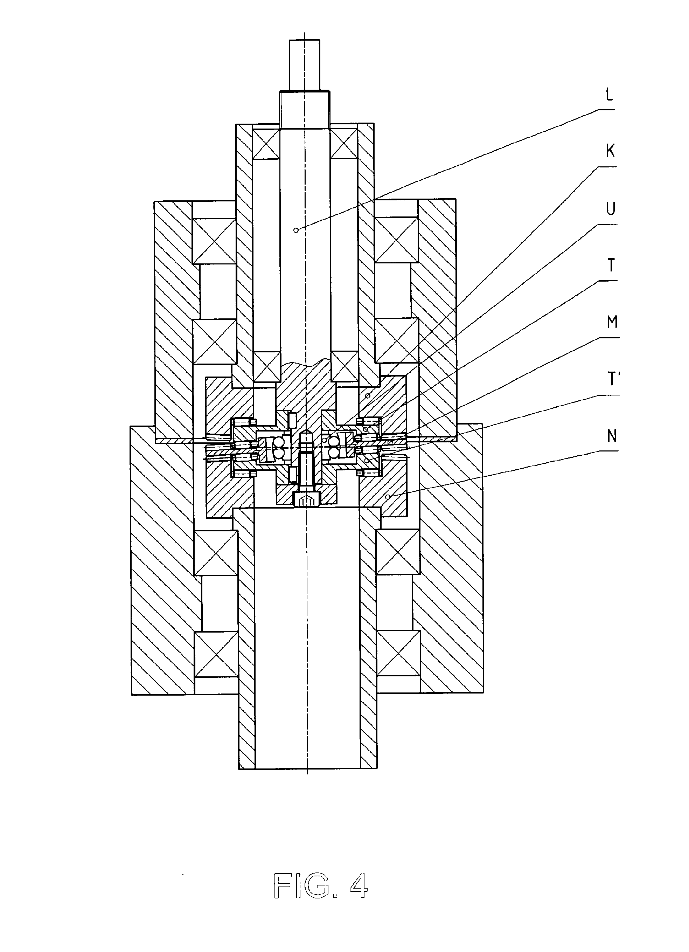

In the diagram of fig.4 there is illustrated the application of the present device as variator-phaser between a driving member and a driven member.

It is assumed that toothed member N is the driving member and toothed member K is the driven one, while shaft L with the double cam T, T' carries out the adjustment function and is driven by an independent motor. Obviously also in this case the intermediate disk M simultaneously engages the two toothed members N and K and its axis can tilt since it is mounted on a central swivel-bearing U.

Starting always from the definition of $\tau_o$ and from the formula of Willis already used in the second embodiment, and considering that in this case $\omega_N$ is not zero, there is obtained the similar relation:

$$\omega_K=\omega_L*(1-\tau_o)+\omega_N\tau_o$$

whereby the reduction ratio now results:

$$\tau=\omega_K/\omega_N=(\omega_L/\omega_N)*(1-\tau_o)+\tau_o=(\omega_L/\omega_N)*[1-(z_N/z_{MN})*(z_{MK}/z_K)]+$$

$$(z_N/z_{MN})*(z_{MK}/z_K)$$

Also in this case to achieve the highest adjustment precision it is necessary that $\tau_o$ be as close as possible to unity. Therefore when setting the same conditions illustrated above in the second embodiment and taking, for example, the same values for the numbers of teeth $z_N=101$, $z_{MN}=100$, $z_{Mk}=99$ and $z_K=100$, there is obtained again $\tau_o=0,9999$.

As a consequence, when shaft L is still ($\omega_L=0$) the device operates as a common gearing ($\tau=\tau_o=0,9999$), whereas when it rotates at the same speed of the driving member ($\omega_L=\omega_N$) the device produces a change in the speed of the driven member equal to the reduction ration that would be achieved in the operation as reducer ($\tau=1$). Obviously the change which is obtained is proportional to the speed of shaft L, e.g. by rotating it at a speed twice the speed of the driving member ($\omega_L=2\omega_N$) there is obtained twice as much change ($\tau=2-\tau_o=1,0001$).

In practice, by rotating shaft L there is produced an absolute precession motion of disk M which causes a change in the angular velocity of the driven member allowing, within certain limits given by the selected numbers of teeth, to make regular the speed of rotation.

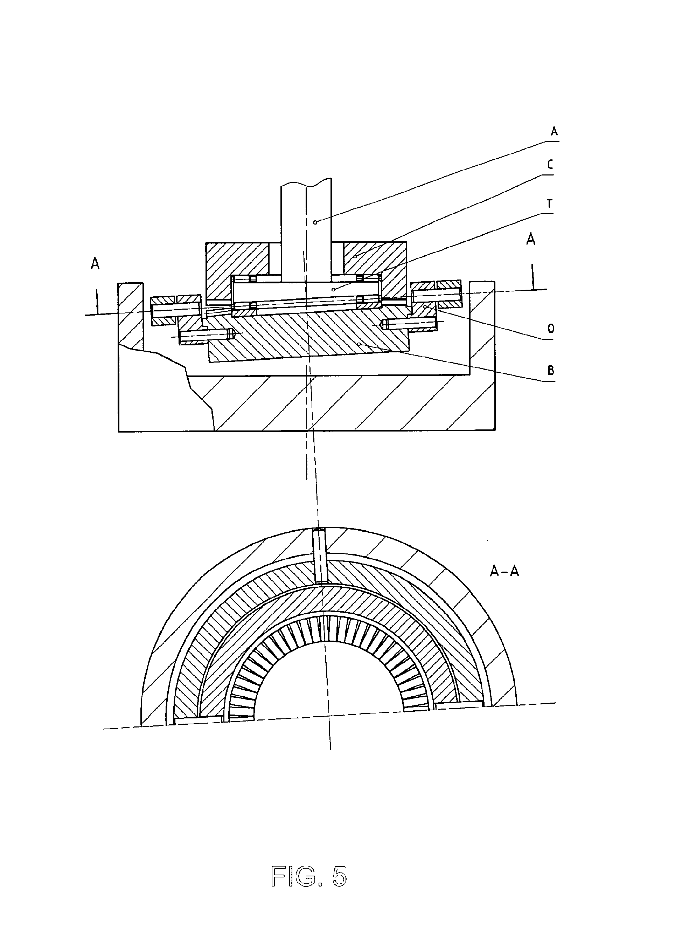

Fig.5 illustrates an alternative solution for the above-described support and restraint systems of toothed member B. In particular, in this case there is used a gimbal O consisting, as shown in the sectional view along line A-A, of two concentric rings connected by two pairs of pins aligned along mutually orthogonal axes. More specifically, the two rings are external to and concentric with member B, with a first pair of pins connecting the outermost ring formed by the device case to the intermediate ring, and a second pair of pins connecting said intermediate ring to member B.

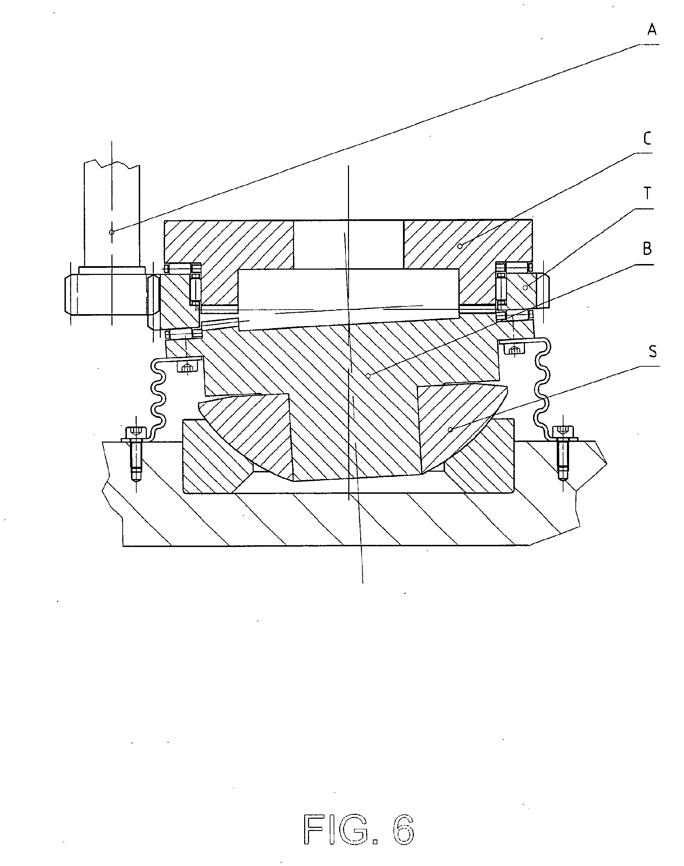

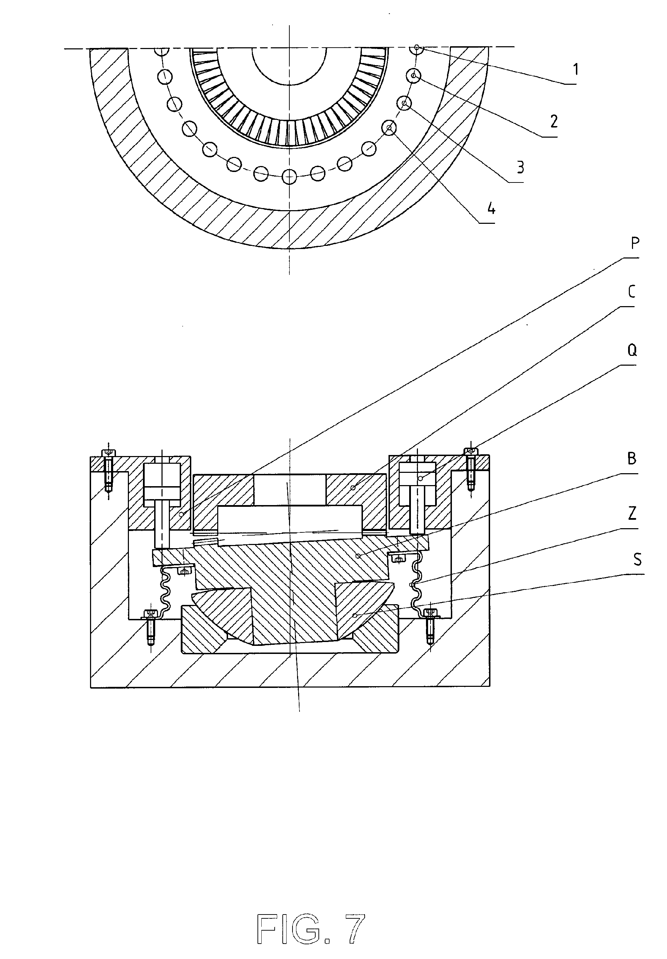

Also the end cam T of the driving shaft A is just one of the possible means for obtaining the rotation of the axis of the toothed member B, E or M around the axis of the toothed member C, D, K or N, as illustrated in figs.6, 7 which show alternative driving means.

In particular fig.6 illustrates an embodiment of the device wherein cam T is provided with an external toothing and is arranged outside the bevel gear formed by the toothed members. In this case the driving shaft A is parallel to but not coaxial with the bevel gear and ends with a toothed wheel which, by laterally engaging said toothing of cam T, forms a gear which transmits the rotation of shaft A to cam T. It is clear that this gear already constitutes a first reduction stage since the diameter of the toothed wheel of shaft A is much smaller than the diameter of the external cam T.

In a further embodiment illustrated in fig.7 the rotation of the axis of the toothed member B is obtained through a flange P, external with respect to toothed member C, supporting a series of linear actuators Q (pneumatic, oleodynamic or electromagnetic). Said actuators Q are arranged evenly spaced along the circumference and sequentially operated (1, 2, 3, 4.....n), as shown in the top plan half-view, so as to push on a peripheral flange of toothed member B.

In this way there is reproduced in a discrete way the continuous action of cam T of the previous embodiment of fig.6, the number of operating cycles of actuators Q in a minute corresponding to the speed of rotation in rev/min of shaft A. In practice, therefore, the sequential reciprocating linear motion of actuators Q still adds up to a rotary motion as in the previous embodiments.

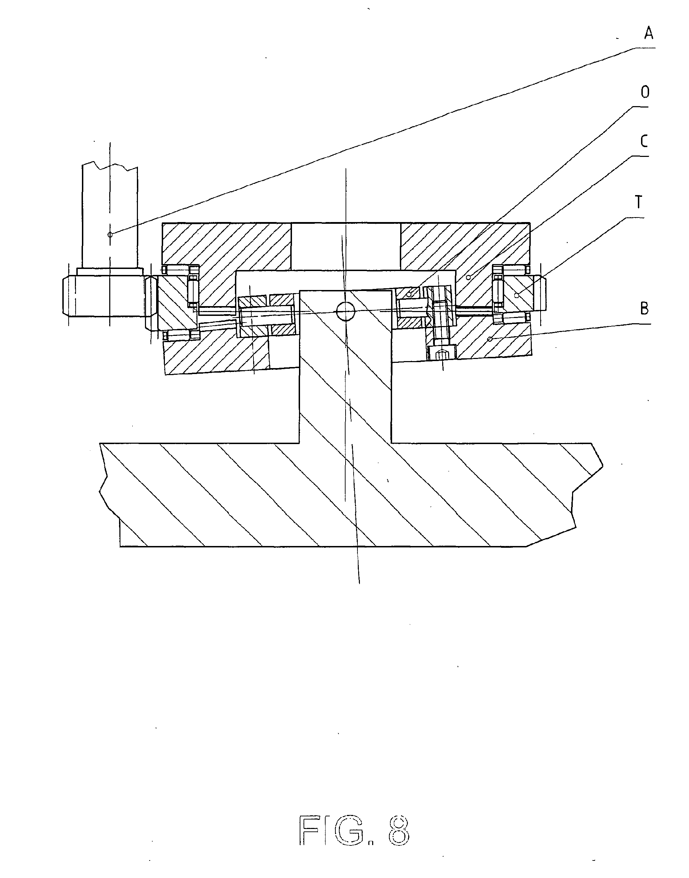

It should be noted that the above-described driving means and the different support and restraint means may be freely combined according to specific manufacturing requirements, as shown in figs.8-11.

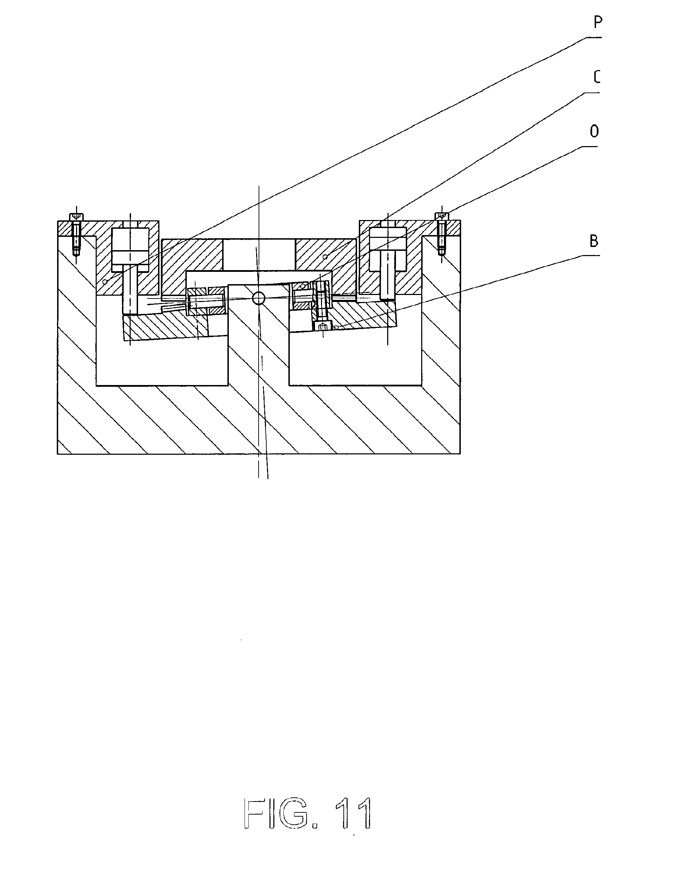

In particular, fig.8 shows a support and restraint system using a gimbal O inside toothed member B in combination with the external cam T; and fig.11 shows the same type of support and restraint system combined with the driving through the linear actuators of the external flange P.

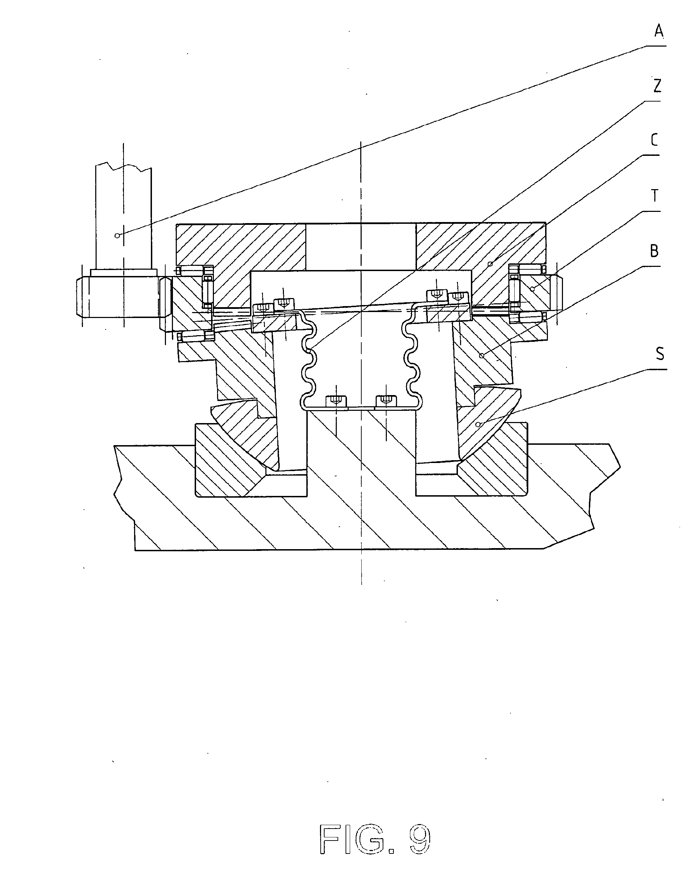

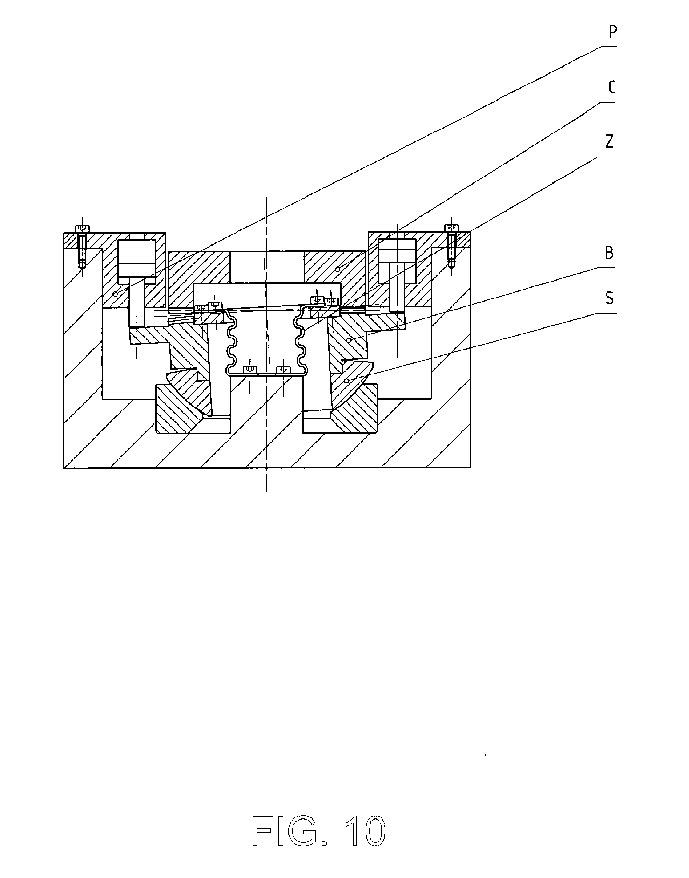

Similarly, fig.9 shows a support and restraint system using a hemispherical support S and a flexible coupling Z inside toothed member B in combination with the external cam T; and fig.10 shows the same type of support and restraint system combined with the driving through the linear actuators of the external flange P.

Moreover, the function carried out by the hemispherical support S and the flexible coupling Z may be achieved also by a constant-velocity universal joint, i.e. two gimbals in series.

It is clear therefore that the above-described and illustrated embodiments of the device according to the invention are just examples susceptible of various modifications. In particular, in all embodiments with the double cam the second cam T' can be replaced by the hemispherical support S with flexible coupling Z, while retaining the intermediate disk with double toothing. Furthermore, the needle bearings R can be replaced by other mechanically equivalent friction-preventing elements such as friction or fluid-film bearings, or completely dispensed with by using for the contact surfaces low friction-coefficient materials or coatings.

**Claims**

1. Speed-reducing device for transmitting a rotary motion **characterized in that** it includes means for generating on a toothed member (B, E, M) a rotary motion of the axis of said toothed member (B, E, M) around a second axis, the toothed member (B, E, M) being engaged with at least another toothed member (C) through radially arranged front teeth, different in number between the two said members, which form a bevel gear, the toothed member (B, E, M) in contact with said driving means being provided with support and restraint means which allow the inclination of its axis.

2. Device according to claim 1, **characterized in that** said driving means consist of an end cam (T) with a face orthogonal to the axis around which the axis of rotation of the toothed member (B, E, M) rotates.

3. Device according to claim 2, **characterized in that** said end cam (T) is located at the end of a driving shaft (A) coaxial with the bevel gear formed by the two toothed members.

4. Device according to claim 2, **characterized in that** said end cam (T) is located outside the bevel gear and is provided with an external toothing forming a gear by laterally engaging a toothed wheel located at the end of a driving shaft (A).

5. Device according to one or more of the preceding claims, **characterized in that** it includes a second end cam (T') opposite and parallel with respect to said end cam (T) at a distal position, a disk (E, M) mounted between said cams (T, T') on a central swivel-bearing (U), and a further toothed member (D, N) at a distal position with respect to the second cam (T'), said disk (E, M) being provided with a toothing on each face so as to simultaneously engage a first toothed member (C, K) and said further toothed member (D, N).

6. Device according to claim 1, **characterized in that** said driving means consist of a series of sequentially operable linear actuators (Q), parallel to the axis around which the axis of rotation of the driven toothed member (B, E, M) rotates and evenly spaced along the circumference on a peripheral flange (P) coaxial with said axis.

7. Device according to one or more of the preceding claims, **characterized in that** the support and restraint means consist of a gimbal (O).

8. Device according to claim 7, **characterized in that** said gimbal (O) consists of two concentric rings connected by two pairs of pins aligned along mutually orthogonal axes, said rings being external to and concentric with the driven toothed member (B, E, M).

9. Device according to claim 7, **characterized in that** said gimbal (O) is inside the driven toothed member (B, E, M).

10. Device according to one or more of the preceding claims, **characterized in that** the support and restraint means consist of a flexible coupling (Z) combined with a hemispherical or ring-hemispherical support (S).

11. Device according to claim 10, **characterized in that** said flexible coupling is outside the driven toothed member (B, E, M).

12. Device according to one or more of the preceding claims, **characterized in that** the support and restraint means consist of a constant-velocity universal joint.

**13.** Device according to claim 5, **characterized in that** in both gears formed between the disk (E, M) and the two toothed members (C, D; K, N) there is a difference in the number of teeth between the two engaged toothings.

**14.** Device according to one or more of the preceding claims, **characterized in that** the contact between the faces of the cam (T) or cams (T, T') and the toothed members (B, C, D, E, K, M, N) takes place through needle bearings (R).

**15.** Device according to one or more of the preceding claims, **characterized in that** the difference in the number of teeth between the toothings of the gears is of one tooth.

**16.** Device according to one or more of the preceding claims, **characterized in that** one of the two toothed members (C, D) with which the disk (E) is engaged is fixed.

**17.** Device according to one or more of the preceding claims, **characterized in that** the center of rotation of the axis of the driven toothed member (B, E, M) corresponds to the point of intersection of the generatrices of the pitch cone of the two toothed members which form the bevel gear.

FIG. 1

FIG. 2

FIG. 3

L

K

U

T

M

T'

N

FIG. 4

A

C

T

A

O

A

B

A–A

FIG. 5

A

C

T

B

S

FIG. 6

FIG. 7

A

0

C

T

B

FIG. 8

A

Z

C

T

B

S

FIG. 9

P

C

Z

B

S

FIG. 10

P

C

O

B

FIG. 11

**European Patent Office**

## EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | GB 2 134 208 A (VEB)<br>8 August 1984 (1984-08-08)<br>* figures * | 1,2,12, 17 | F16H1/32 |
| X | US 3 517 564 A (JOHNSTON CLIFFORD V)<br>30 June 1970 (1970-06-30)<br>* figures * | 1,6-9 | |
| X | GB 2 011 016 A (SKF NOVA AB)<br>4 July 1979 (1979-07-04)<br>* figure 3 * | 1-3,7,8 | |
| X | US 6 119 537 A (JOST GEORG)<br>19 September 2000 (2000-09-19)<br>* figures * | 1-3,10, 11 | |
| X | CH 438 872 A (HAEGGLUND & SOENER AB)<br>30 June 1967 (1967-06-30)<br>* figures * | 1-3,10, 12,15 | |
| X<br>A | EP 0 343 354 A (ASEA BROWN BOVERI)<br>29 November 1989 (1989-11-29)<br>* figures * | 1-3,12, 14<br>15 | TECHNICAL FIELDS SEARCHED (Int.Cl.7)<br><br>F16H |
| X | US 5 383 821 A (MURAKAMI HIROSHI ET AL)<br>24 January 1995 (1995-01-24)<br>* figures * | 1-3,5,16 | |
| X | GB 656 683 A (ALOIS TSCHERNE)<br>29 August 1951 (1951-08-29)<br>* figures * | 1,2,5, 13,16 | |
| X<br>A | SU 1 545 019 A (LE POLT I IM M I KALININA)<br>23 February 1990 (1990-02-23)<br>* figures * | 1-3,5,16<br>4,13 | |

—/——

The present search report has been drawn up for all claims

| Place of search | Date of completion of the search | Examiner |
|---|---|---|
| THE HAGUE | 27 November 2001 | Goeman, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
....................................................
& : member of the same patent family, corresponding document

EPO FORM 1503 03.82 (P04C01)

EP 1 270 995 A1

# EUROPEAN SEARCH REPORT

**European Patent Office**

**Application Number**

EP 01 11 5856

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | PATENT ABSTRACTS OF JAPAN vol. 013, no. 591 (M-913), 26 December 1989 (1989-12-26) -& JP 01 247847 A (SUMITOMO HEAVY IND LTD), 3 October 1989 (1989-10-03) * abstract * | 1,2,12, 14,15 | |
| | | | **TECHNICAL FIELDS SEARCHED** (Int.Cl.7) |

The present search report has been drawn up for all claims

| Place of search | Date of completion of the search | Examiner |
|---|---|---|
| THE HAGUE | 27 November 2001 | Goeman, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

20

**ANNEX TO THE EUROPEAN SEARCH REPORT
ON EUROPEAN PATENT APPLICATION NO.**

EP 01 11 5856

This annex lists the patent family members relating to the patent documents cited in the above-mentioned European search report.
The members are as contained in the European Patent Office EDP file on
The European Patent Office is in no way liable for these particulars which are merely given for the purpose of information.

27-11-2001

| Patent document cited in search report | | Publication date | Patent family member(s) | | Publication date |
|---|---|---|---|---|---|
| GB 2134208 | A | 08-08-1984 | DD | 228713 A3 | 16-10-1985 |
| | | | DD | 230139 A3 | 20-11-1985 |
| | | | BE | 898375 A1 | 30-03-1984 |
| | | | DE | 3341558 A1 | 07-06-1984 |
| | | | FI | 834433 A | 07-06-1984 |
| | | | FR | 2541405 A1 | 24-08-1984 |
| | | | HU | 37235 A2 | 28-11-1985 |
| | | | IT | 1193435 B | 22-06-1988 |
| | | | NL | 8304197 A | 02-07-1984 |
| | | | SE | 8306659 A | 07-06-1984 |
| | | | YU | 237083 A1 | 30-06-1988 |
| US 3517564 | A | 30-06-1970 | NONE | | |
| GB 2011016 | A | 04-07-1979 | JP | 54091672 A | 20-07-1979 |
| US 6119537 | A | 19-09-2000 | NONE | | |
| CH 438872 | A | 30-06-1967 | NONE | | |
| EP 343354 | A | 29-11-1989 | SE | 466994 B | 11-05-1992 |
| | | | DE | 68903191 D1 | 19-11-1992 |
| | | | DE | 68903191 T2 | 06-05-1993 |
| | | | EP | 0343354 A1 | 29-11-1989 |
| | | | SE | 8801356 A | 14-10-1989 |
| | | | US | 4997413 A | 05-03-1991 |
| US 5383821 | A | 24-01-1995 | JP | 6235445 A | 23-08-1994 |
| GB 656683 | A | 29-08-1951 | NONE | | |
| SU 1545019 | A | 23-02-1990 | SU | 1545019 A1 | 23-02-1990 |
| JP 01247847 | A | 03-10-1989 | JP | 2632352 B2 | 23-07-1997 |

EPO FORM P0459

For more details about this annex : see Official Journal of the European Patent Office, No. 12/82